# EUROPEAN PATENT APPLICATION

(11) **EP 2 696 150 A1**
(43) Date of publication of application: **12.02.2014**
(21) Application number: 12382319.7
(22) Date of filing: 06.08.2012
(51) Int. Cl.: F24J 2/46

(54) **Device for maintenance of flat elements, in particular solar panels**

(71) Applicant: Chemik Innovacion y Desarrollos S.L., 20305 Irun (ES)
(72) Inventor: Chinchurreta Diaz, Juan Cruz, 20280 Hondarribia (ES)
(74) Representative: Igartua, Ismael

(57) **Abstract**

Device that comprises a maintenance module suitable for performing the maintenance of the surface (2a) of a flat element, in particular of a solar panel. The maintenance module is movable in relation to the flat element and said maintenance module comprises a cleaning module that also comprises at least one brush (5) suitable for rotating on the surface (2a) of the flat element and a tank (6) suitable for containing water or any other fluid suitable for cleaning. The cleaning module comprises above the brush (5) a cover (7) adapted to the contour of said brush (5) to retain and/or redirect at least one portion of water projected by the brush (5).

## Description

### TECHNICAL FIELD

This invention relates to devices suitable for performing different maintenance tasks on flat elements, in particular solar panels.

### PRIOR ART

There are known devices for the cleaning of flat surfaces of solar panels, such as robots or articulated arms connected to a self-propelled vehicle such as a lorry, crane, tractor or similar vehicle. These devices comprise a brush or roller that are soaked in water and also a feeder system with the function of transporting the water required to soak said brush or roller from a tank disposed at a certain distance from the brush or roller.

There are also known devices for cleaning flat surfaces of solar panels that comprise a moving structure that moves the brush or roller along the flat surface of the solar panel. It is also known that said moving structure may comprise a tank of water. JP2011036833 A thus discloses an apparatus for cleaning the surface of a solar panel that comprises a tank fastened to a moving structure. The water contained in said tank is guided towards a brush that is in contact with the surface of the solar panel.

### BRIEF DISCLOSURE OF THE INVENTION

It is the object of the invention to provide a device for performing different maintenance tasks on flat elements, in particular solar panels, as described in the claims.

The device of the invention is suitable for performing maintenance tasks on flat elements, such as solar panels. The device comprises a maintenance module suitable for performing the maintenance of the surface of the flat element, said maintenance module being movable in relation to the flat element. The maintenance module comprises a cleaning module that also comprises at least one brush suitable for rotating on the surface of the flat element and a tank suitable for containing water or any other fluid suitable for cleaning. The cleaning module comprises above the brush a cover adapted to the contour of said brush to retain and/or redirect at least one portion of water projected by the brush.

Thanks to the device of the invention a significant amount of water or of the liquid used to clean the surface of the flat element is saved due to the fact that the device of the invention is suitable for retaining a large amount of water that is projected by the brush itself due to its movement of rotation. Thanks to the shape of the cover of the cleaning module, said water is redirected towards the brush.

These and other advantages and characteristics of the invention will be made evident in the light of the drawings and the detailed description thereof.

### DESCRIPTION OF THE DRAWINGS

FIG. 1 shows a perspective view of a first embodiment of the device according to the invention.
FIG. 2A shows a second perspective view of the device of FIG. 1 without the guide modules.
FIG. 2B shows a third perspective view of the device of FIG. 1 without the guide modules.
FIG. 3 shows a fourth perspective view of the device of FIG. 1 without the guide modules and without the structure that supports the receiver of the alignment means.
FIG. 4 shows a perspective view of the tank of the device of FIG. 1.
FIG. 5 shows a perspective view of a second embodiment of the invention.
FIG. 6 shows an exploded view of the second embodiment of FIG. 5.
FIG. 7 shows a perspective view of a solar plant with two devices according to the embodiment of FIG. 5.

### DETAILED DISCLOSURE OF THE INVENTION

The device 1 of a first embodiment of the invention is suitable for performing maintenance tasks on flat elements, such as solar panels. The flat element 2 comprises a surface 2a, a lower surface and a perimeter edge. Said edge comprises two side edges 11a and 11b, a front edge and a rear edge. In the specific case of a solar panel, it usually comprises a perimeter frame that surrounds the surface of the solar panel. In this case, said perimeter frame corresponds with the perimeter edge of the flat element 2. The edges of the element 2 also comprise an upper face, a lower face and a front face.

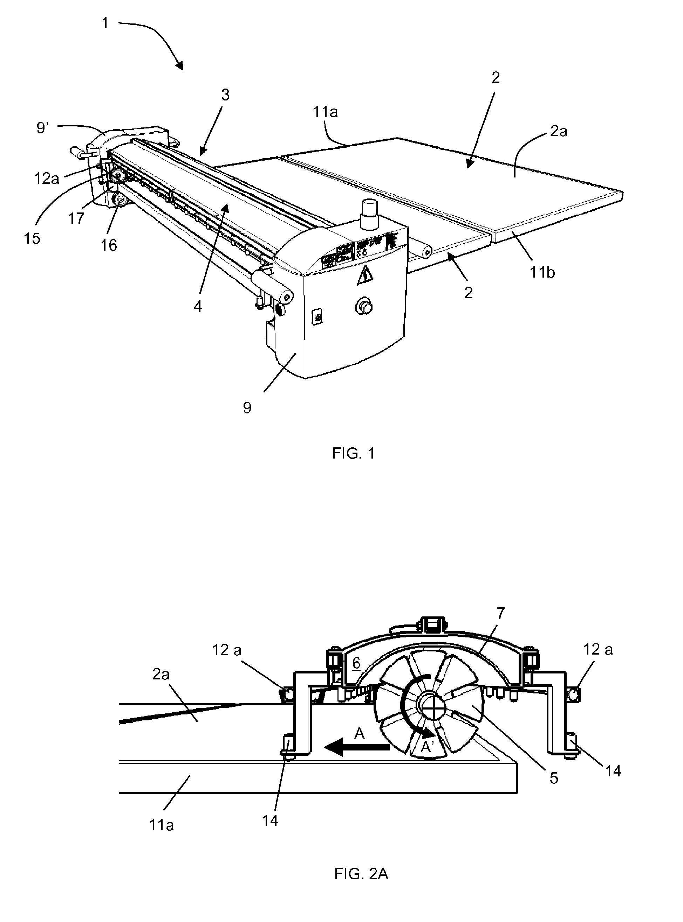

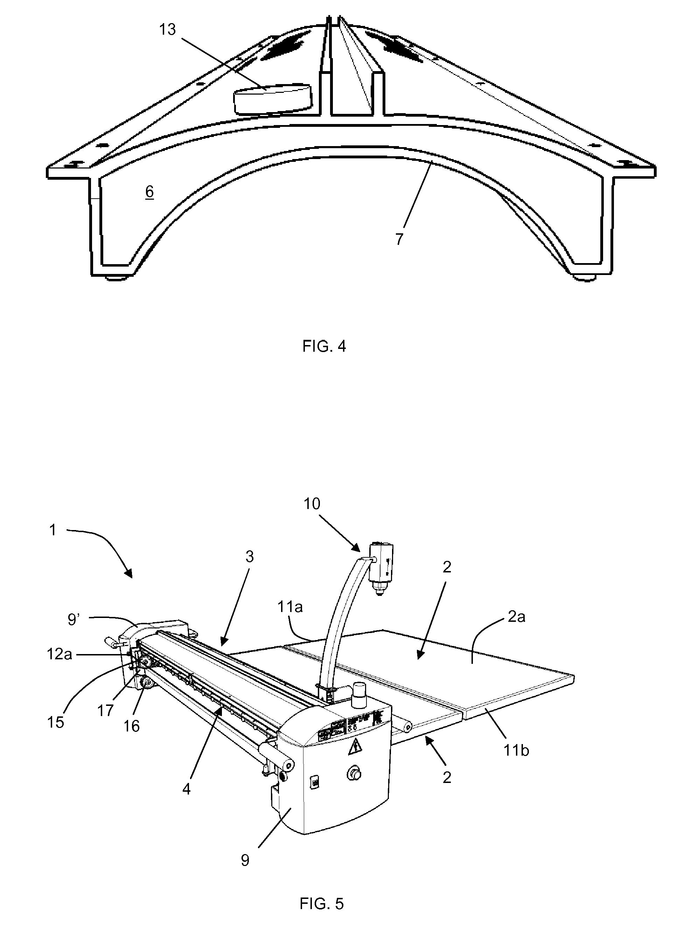

The device 1 of the invention, as shown in Figure 1, comprises a maintenance module 3 suitable for performing the maintenance of the surface 2a of the flat element 2, said maintenance module 3 being movable in relation to the flat element 2. The maintenance module 3 comprises a cleaning module 4 that also comprises at least one brush 5 suitable for rotating on the surface 2a of the flat element 2 and a tank 6 suitable for containing water or any other fluid suitable for cleaning. The cleaning module 4 comprises above the brush 5 a cover 7, shown in more detail in the example of Figure 4, adapted to the contour of said brush 5 to retain and/or redirect at least one portion of water projected by the brush 5.

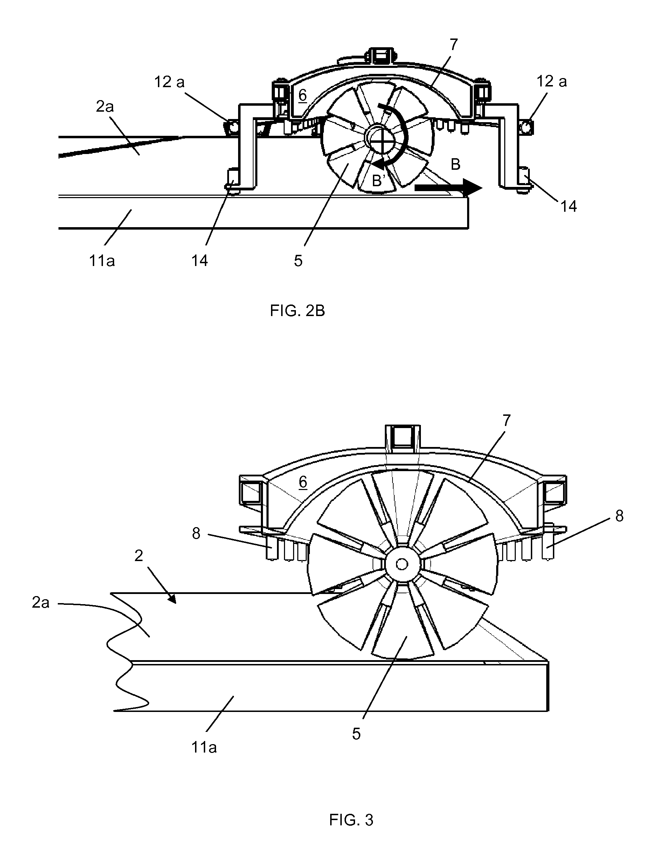

As shown in Figures 2A, 2B and 3, the tank 6 of the device 1 is disposed above the brush 5. In this first embodiment, the cover 7 of the brush 5 corresponds with the lower part of tank 6, as can be seen in detail in Figure 4, although alternatively, in an embodiment not shown in the figures, the cover 7 and the tank 6 may not be integrated. The cover 7, in this embodiment, preferably comprises an arched shape, as shown in Figures 2A, 2B, 3 and 4, with the result that it is adaptable to the contour of the brush 5 and enables the rotation of said brush 5.

Thanks to the device 1 of the invention a significant amount of water or of the liquid used to clean the surface 2a of the flat element 2 is saved due to the fact that the device 1 is suitable for retaining a large amount of water that is projected by the brush 5 itself due to its movement of rotation, acting in the same way as the mudguard of a vehicle or bicycle. Thanks to the shape of the cover 7 of the cleaning module 4, said water is redirected once more towards the brush 5 and sticky materials such as mud may adhere to the surface of said cover 7, keeping the brush 5 clean.

To enable the tank 6 to be filled and emptied easily it comprises in the upper part at least one filling cap 13 and in the lower part at least one drain cap, not shown in the figures, which is very useful for cleaning the tank 6, among other tasks. In the first embodiment of the invention the tank 6 comprises two filling caps.

As the tank 6 is built into the tank 1, the use of hoses transporting the water from an adjacent outer tank to the brush 5 while the tank 1 is operating is avoided, thereby preventing the tank 1 from becoming tangled up with said hoses.

In an embodiment not shown in the figures, the cleaning module 4 of the maintenance module 3 also comprises at least one polishing unit suitable for waxing and/or polishing the surface 2a, at least one rubber wiper, at least one suction unit suitable for removing excess water and/or residual cleaning agents, pushing means suitable for removing snow, or a combination of them.

The device 1 is moved according to a direction of advance that is longitudinal in relation to the flat element 2. The device 1 is reversible, with the result that the device 1 may move according to a first direction A or according to a second direction B opposite to said first direction A. The brush 5 rotates in the direction of advance of the device 1, so when the device 1 advances according to said first direction A, the brush 5 rotates in an anti-clockwise direction A', as shown in Figure 2A, and when the device 1 advances according to said second direction B the brush 5 rotates in a clockwise direction A', as shown in Figure 2B.

The cleaning module 4 also comprises a plurality of nozzles 8 for distributing the water or fluid contained in the tank 6. Said nozzles 8 are disposed ahead of the brush 5 according to the direction of advance of the device 1. As a result, the water or the fluid of the tank 6 falls directly on the surface 2a of the flat element 2, softening the possible dirt on the surface 2a and enabling the brush 5 to drag and remove said dirt easily as it advances, thereby increasing the cleaning efficiency of the surface 2a of the flat element 2. As the device 1 is reversible, the cleaning module 4 also comprises another plurality of nozzles 8, disposed behind the brush 5, with the result that whatever the direction of advance, the water or liquid of the tank 6 may fall directly on the surface 2a ahead of the brush 5.

The device 1, according to the first embodiment of the invention, also comprises a mobile structure that is suitable for moving the maintenance module 3 in relation to the element 2. Said moving structure comprises two guide modules 9 and 9' disposed in such a way that they face each other and are connected through the maintenance module 3. Each guide module 9 and 9' comprises upper guide means 15, preferably in the form of rollers or wheels, suitable for making contact on the upper face of the corresponding side edge 11a and 11b of the flat element 2, and lower guide means 16, preferably in the form of rollers or wheels, suitable for making contact on the lower face of the corresponding side edge 11a and 11b of the flat element 2. Each guide module 9 and 9' embraces the corresponding side edge 11a and 11b of the flat element 2, so each side edge 11a and 11b is disposed between the upper guide means 15 and the lower guide means 16 in the manner of a sandwich. As a result, each guide module 9 and 9' is guided in relation to the upper face and to the lower face of the corresponding side edge 11a and 11 b. The upper guide means 15 are tilting, with the result that they absorb the possible irregularities of the element 2 and thereby ensure the contact of said upper guide means 15 on the upper face of the corresponding side edge 11a and 11b of the element 2.

In addition, in order to prevent the device 1 from sliding in an undesired manner on the flat area of the surface 2a of the flat element 2, each guide module 9 and 9' also comprises lateral guide means 17, preferably in the form of rollers or wheels, that are suitable for making contact on the front face of the corresponding side edge 11a and 11b of the flat element 2 and which prevent the device 1 from sliding laterally. Thus, this guarantees that the device 1 may move on the surface 2a of the element 2 without the risk of it sliding involuntarily whatever the position or the inclination of the flat element 2, in other words inclined at 0°, at 45°, at 90° or by even more.

The device 1 according to the first embodiment of the invention also comprises alignment means suitable for keeping the maintenance module 3 substantially aligned in relation to the direction of advance of the device 1, said alignment means comprising at least one emitter 12a and at least one receiver (not shown in the figures), preferably of light or a laser. In this first embodiment, the guide module 9' comprises two emitters 12a each one disposed on one end of the guide module 9', and the other guide module 9 comprises two receivers also disposed on each end of the guide module 9. As the skilled person already knows, each pair of emitter 12a and receiver must be aligned, in such a way that the signal emitted by the emitter 12a must be received by the receiver. If the signal of one of the emitters 12a is not received by the corresponding receiver, the device 1 is capable of aligning itself in order to correct the trajectory (accelerating or braking one of the guide modules 9 or 9') until the signals emitted by the emitters 12a are received by the corresponding receivers. This characteristic is especially advantageous in preventing the device 1 from becoming jammed and being unable to advance.

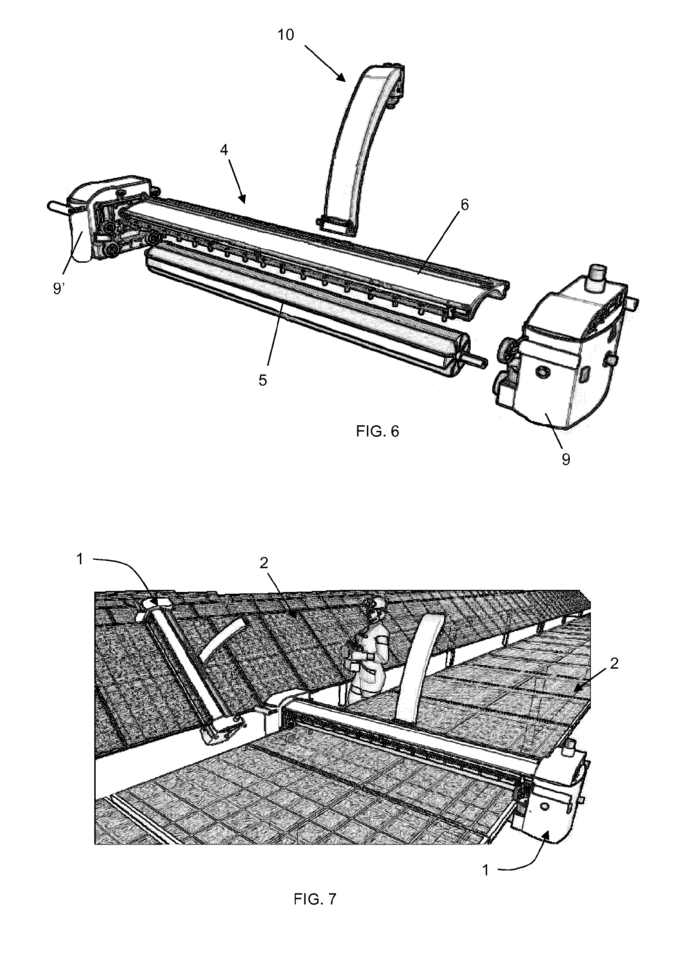

The device 1 according to a second embodiment of the invention comprises all the characteristics of the device 1 of the first embodiment, and in addition the maintenance module 3 comprises a diagnosis module 10 suitable for detecting defective cells in a photovoltaic panel. This last characteristic is especially advantageous in the specific case that the flat element 2 corresponds with a photovoltaic panel where the surface 2a of said photovoltaic panel is composed of a plurality of photovoltaic cells. As the skilled person well knows, the temperature of said cells is an important factor in determining the correct operation of the photovoltaic panel. In addition, a defective cell may result in damage to the neighbouring cells, making the problem worse over time, which makes it especially important to detect defective cells as soon as possible. As the skilled person knows, a defective cell irradiates a temperature above the operating temperature. The diagnosis module 10 of the device 1 thus comprises a thermographic unit, preferably a thermographic camera or a plurality of thermographic sensors. As the device 1 advances, the diagnosis module 10 is suitable for longitudinally scanning the surface 2a of the flat element 2, in this case of the photovoltaic panel. According to the example of Figures 5 and 6 the thermographic unit of the diagnosis module 10 comprises a thermographic camera that is movable in a transverse direction with the result that it is also suitable for transversally scanning the surface 2a of the flat element 2, covering substantially the entire surface 2a of the element 2. The diagnosis module 10 may be movable in relation to the maintenance module 3 through well-known systems, such as a rack-and pinion system etc. In another example, not shown in the figures, the thermographic unit of the diagnosis module 10 comprises a plurality of thermographic sensors instead of the thermographic camera. Said thermographic sensors are disposed along the maintenance module 3, so they are also suitable for transversally scanning the surface 2a of the flat element 2, also covering substantially the entire surface 2a. In this case, it is not necessary that the diagnosis module 10 is movable.

The device 1 according to any of the embodiments described may be adapted to transmit data by means of radio technology, GSM, WIFI or any other wireless technology. As a result, the diagnosis module 10 of the second embodiment may generate a thermographic map with a GPS reference indicating the exact location of the hot points, or defective cells, detected in the photovoltaic panel or even in a plurality of photovoltaic panels, as may be the case in a solar plant. As a result, the detection and the replacement or repair of said defective cells is made far easier, thereby increasing the efficiency and the durability of the photovoltaic panels. In addition, the data collated by the diagnosis module 10 may also be stored so that statistical control of the situation of the panels may be carried out and thus, future anomalies may be anticipated. In this respect, it may also be possible to get a maintenance plan designed to keep a solar plant comprising a plurality of photovoltaic panels in optimal operating condition.

The device 1, according to any of the embodiments described, may also include a series of alarms and safety measures to guarantee the correct operation of the device 1, and to prevent potential risks that may affect the safety of the user while the device 1 is operating.

In this respect, the device 1, according to any of the embodiments described, comprises preferably at least one detector 14, for example inductive, proximity etc, which detects the lack of guide rail, indicating that the device 1 has to stop because it has reached the end of the track. In the example of Figures 2A and 2B each guide module 9 and 9' comprises a detector 14 on each end of the guide module 9 and 9'.

The device 1 according to any of the embodiments described may also communicate by means of radio technology, GSM, WIFI or Bluetooth with mobile phones, tablets, iPads, etc so that the user can keep track at all times of the state of one or more devices 1 that are operating, for example, at a solar plant. The user may also receive notifications and alarms (eg, a lack of water in the tank), with the result that the user does not have to be present while the device 1 or devices 1 is/are working, allowing the user to perform other tasks.

In addition, the device 1, also according to any of the embodiments described, is suitable for being remotely controlled or for being programmed so that it operates in an autonomous and self-sufficient way. To achieve this, the device 1 is supplied by batteries, although the option of it being supplied by solar panels or by a combination of both systems is not ruled out. To enable the device 1 to be programmed so that it operates in automatic mode, one of the guide modules 9 may comprise a programming panel.

The device 1, or a plurality of devices 1, according to any of the embodiments described, is suitable for being used in a solar plant that comprises a plurality of solar panels 2, as shown in Figure 7. Said device 1 is also suitable for controlling the state of a solar panel in the facilities of solar panel manufacturers.

The device 1, according to any of the embodiments described, preferably comprises materials based on stainless alloys in order to withstand the inclement weather without the device 1 being damaged.

The assembly of the components of the device 1 is very simple, it being especially advantageous to transport, in long journeys for example, the device 1 unassembled in order to save space in the transport vehicle. When the device 1 has been assembled, in order to make it easier to handle, each guide module 9 and 9' comprises two handles, each one disposed on one end (as shown in Figures 1, 5 and 6), with the result that the device 1 may be easily transported by two people, as if it were a stretcher. Alternatively, each guide module 9 and 9' may comprise wheels to make the device 1 even easier to handle. The user may push the device 1 to move it on the floor and thereby transport it to its destination or place of use.

## Claims

1. Device for the maintenance of flat elements, in particular solar panels, which comprises a maintenance module (3) suitable for performing the maintenance of the surface (2a) of the flat element (2), said maintenance module (3) being movable in relation to the flat element (2) and the maintenance module (3) comprising a cleaning module (4) that comprises at least one brush (5) suitable for rotating on the surface (2a) and a tank (6) suitable for containing water or any other fluid suitable for cleaning, **characterised in that** the cleaning module (4) comprises above the brush (5) a cover (7) adapted to the contour of said brush (5) to retain and/or redirect at least one portion of water projected by the brush (5).

2. Device according to claim 1, wherein the tank (6) is disposed above the brush (5), the cover of the brush (5) corresponding with the lower part of the tank (6).

3. Device according to claims 1 or 2, wherein the cover (7) comprises an arched shape.

4. Device according to any of the preceding claims, wherein the brush (5) rotates in the direction of advance of the device (1).

5. Device according to any of the preceding claims, wherein the device (1) is reversible in such a way that the device (1) may move according to a first direction (A) or according to a second direction (B) opposite to said first direction (A).

6. Device according to any of the preceding claims, wherein the cleaning module (4) also comprises a plurality of nozzles (8) to distribute the water or fluid contained in the tank (6).

7. Device according to claim 6, wherein said nozzles (8) are disposed ahead of the brush (5) according to the direction of advance of the device (1).

8. Device according to claim 7, wherein the cleaning module (4) also comprises another plurality of nozzles (8) disposed behind the brush (5) according to the direction of advance of the device (1).

9. Device according to any of the preceding claims, wherein the device (1) also comprises a mobile structure suitable for moving the maintenance module (3) in relation to the flat element (2).

10. Device according to claim 9, wherein said mobile structure comprises two guide modules (9, 9') disposed in such a way that they face each other.

11. Device according to claim 10, wherein each guide module (9, 9') embraces the corresponding side edge (11a, 11b) of the flat element (2).

12. Device according to claims 10 or 11, wherein the two guide modules (9, 9') are connected by the maintenance module (3).

13. Device according to any of the preceding claims, which also comprises alignment means suitable for keeping the maintenance module (3) substantially aligned in relation to the direction of advance of the device (1), said alignment means comprising at least one emitter (12a) and at least one receiver, preferably of light or a laser.

14. Device according to any of the preceding claims, which comprises a diagnosis module (10) suitable for detecting defective cells in a photovoltaic panel, the surface (2a) of the flat element (2) corresponding with the surface of said photovoltaic panel.

15. Device according to claim 14, wherein said diagnosis module (10) comprises a thermographic unit, preferably a thermographic camera or a plurality of thermographic sensors.
